Europäisches Patentamt

European Patent Office

Office européen des brevets

(11) Veröffentlichungsnummer: **0 242 754**
**A2**

(12) **EUROPÄISCHE PATENTANMELDUNG**

(21) Anmeldenummer: 87105418.5

(22) Anmeldetag: 11.04.87

(51) Int. Cl.⁴: **C09D 17/00 , C08J 3/20**

(30) Priorität: 19.04.86 DE 3613257

(43) Veröffentlichungstag der Anmeldung:
28.10.87 Patentblatt 87/44

(84) Benannte Vertragsstaaten:
**BE DE FR GB IT NL**

(71) Anmelder: **BASF Lacke + Farben Aktiengesellschaft**
**Sieglestrasse 25**
**D-7000 Stuttgart 30(DE)**

(72) Erfinder: **Günther, Hans, Dipl.-Ing.**
**Osterbronnstrasse 56 A**
**D-7000 Stuttgart 80(DE)**
Erfinder: **Grözinger, Rose**
**Rotenwaldstrasse 41 A**
**D-7000 Stuttgart 1(DE)**
Erfinder: **Kaul, Iris**
**Florian-Geyer-Strasse 20**
**D-7000 Stuttgart 31(DE)**

(74) Vertreter: **Schweiss, Werner, Dr. et al**
**BASF Aktiengesellschaft Patentabteilung**
**Carl-Bosch-Strasse 38**
**D-6700 Ludwigshafen(DE)**

(54) **Neue Pigmentpräparationen, enthaltend ein organisches Pigment, ein Verfahren zu ihrer Herstellung und ihre Verwendung zur Einfärbung von thermoplastischen Kunststoffen.**

(57) Pigmentpräparationen, enthaltend 50 bis 75 Gew.-% eines organischen Pigments, als Trägermaterial Polymerisate auf Basis von Methyl- und/oder Butylmethacrylat, die ein Molekulargewicht von 100000 bis 200000 aufweisen, einen Polymerweichmacher auf Basis von Vollestern von Polyalkoholen mit polyfunktionellen Säuren sowie ein Dispergierhilfsmittel auf Basis von Partialestern von Polyalkoholen mit Fettsäuren, ein Verfahren zu ihrer Herstellung und ihre Verwendung zur |Einfärbung vom thermoplastischen Kunststoffen.

EP 0 242 754 A2

## Neue Pigmentpräparationen, enthaltend ein organisches Pigment, ein Verfahren zu ihrer Herstellung und ihre Verwendung zur Einfärbung von thermoplastischen Kunststoffen

Die vorliegende Erfindung betrifft neue Pigmentpräparationen, enthaltend ein organisches Pigment, als Trägermaterial Polymerisate auf Methacrylatbasis, einen Polymerweichmacher und ein Dispergierhilfsmittel, ein Verfahren zu ihrer Herstellung und ihre Verwendung zur Einfärbung von thermoplastischen Kunststoffen.

Die Einfärbung thermoplastischer Kunststoffe mittels Pigmentpräparationen wird in der Kunststoff verarbeitenden Industrie seit vielen Jahren durchgeführt. Verglichen mit der Verwendung unbehandelter Pigmente ergeben die Pigmentpräparationen den Vorteil einer homogenen und fehlerfreien Einfärbung des Kunststoffsubstrats. Man erreicht auf diesem Weg eine gute Pigmentdispergierung und damit die volle Ausnützung der Farbstärke. Außerdem ermöglicht die Anwendung von Pigmentpräparationen ein staubfreies Arbeiten.

Gegenstand der DE-A-2 941 807 sind transparente Eisenoxide enthaltende Zubereitungen, die als Trägerstoff Polymerisate auf Methacrylatbasis mit einem Molekulargewicht von 100 000 bis 700 000 aufweisen und einen Polymerweichmacher auf Basis von Estern von Polyalkoholen mit mehrfunktionellen Säuren enthalten. Der Gehalt an Eisenoxid in diesen Zubereitungen liegt aber nur bei ca. 20 Gew.-%.

Auch die meisten der Pigmentpräparationen, die organische Pigmente enthalten, weisen einen Pigmentanteil auf, der in dieser Größenordnung liegt (im allgemeinen bis zu ca. 30 Gew.-%).

Spezielle Pigmentpräparationen, die einen Anteil an organischem Pigment von ca. 50 Gew.-% aufweisen, sind auf den Anwendungsbereich der Polyolefine beschränkt.

Neben dem geringen Gehalt an organischem Pigment ist ein weiterer Nachteil der handelsüblichen Pigmentpräparationen vor allem darin zu sehen, daß sie im allgemeinen jeweils nur zur Färbung eines genau definierten Polymerbereichs bzw. in einer bestimmten Verarbeitungstechnologie verwendbar sind.

Aufgabe der vorliegenden Erfindung war es, neue Pigmentpräparationen bereitzustellen, die einen hohen Anteil an organischem Pigment aufweisen und die universell zur Färbung von thermoplastischen Kunststoffen geeignet sind.

Überraschenderweise wurden nun neue Pigmentpräparationen gefunden, enthaltend 50 bis 75 Gew.-% eines organischen Pigments, als Trägermaterial Polymerisate auf Basis von Methyl- und/oder Butylmethacrylat, die ein Molekulargewicht von 100000 bis 200000 aufweisen, einen Polymerweichmacher auf Basis von Vollestern von Polyalkoholen mit polyfunktionellen Säuren sowie ein Dispergiermittel auf Basis von Partialestern von Polyalkoholen mit Fettsäuren.

Die als Trägermaterial dienenden Polymerisate auf Basis von Methyl- und/oder Butylmethacrylat sollen ein Molekulargewicht von 100 000 bis 200 000, vorzugsweise von 100 000 bis 150 000 aufweisen.

Als Polymerweichmacher dienen Produkte auf Basis von Vollestern von Polyalkoholen mit polyfunktionellen Säuren. Geeignete Polyalkohole sind z.B. Propan-1,3-diol, Butan-1,4-diol oder Pentaerythrit. Als polyfunktionelle Säuren kommen beispielsweise Adipinsäure oder Phthalsäure in Betracht. Das Molekulargewicht der Polymerweichmacher kann im Hinblick auf ihre wechselnde Zusammensetzung selbstverständlich schwanken; jedoch werden im allgemeinen bei Verwendung von Komponenten mit einem Molekulargewicht von 2000 bis 6000 gute Ergebnisse erreicht.

Bevorzugt sind Weichmacher auf Basis von Adipinsäure, die ein Molekulargewicht von 2000 bis 6000, vorzugsweise 4000 bis 6000 und insbesondere ca. 6 000 und eine Viskosität von 30 000 bis 40 000 mPa.s (gemessen bei 25°C) aufweisen. Als Alkoholkomponente dient vorzugsweise Butan-1,4-diol.

Solche Weichmacher besitzen neben ihren hervorragenden weichmachenden und gut benetzenden Eigenschaften den Vorteil einer äußerst geringen Flüchtigkeit.

Als Dispergierhilfsmittel dienen Partialester von Polyalkoholen mit Fettsäuren. Geeignete Polyalkohole sind z.B. Butan-1,4-diol und insbesondere Pentaerythrit. Als Säurekomponenten dienen Fettsäuren, insbesondere $C_{12}$-$C_{18}$-Fettsäuren, wobei Stearinsäure besonders bevorzugt ist.

Beispielhaft sei der Partialester aus Stearinsäure und Pentaerythrit genannt, wobei 1 Moläquivalent Pentaerythrit mit 2 Moläquivalenten Stearinsäure verestert wurde. Der HLB-Wert dieser Komponente (Hydrophil-Lipophil-Balance) beträgt hierbei 8,7.

Vorzugsweise enthalten die erfindungsgemäßen Pigmentpräparationen Trägermaterial, Polymerweichmacher und Dispergierhilfsmittel im Gewichtsverhältnis 0,5:0,5:1 bis 4:3:1, insbesondere 1:1:1 bis 4:3:1.

Die neuen Pigmentpräparationen enthalten erfindungsgemäß 50 bis 75 Gew.-% eines organischen Pigments. Als organische Pigmente kommen beispielsweise an sich bekannte Monoazopigmente (z.B. Produkte, die sich von Acetessigarylidderiva-

ten oder von β-Naphtholderivaten ableiten), verlackte Monoazofarbstoffe, Disazopigmente, kondensierte Disazopigmente, Isoindolinderivate, Derivate der Naphthalin-oder Perylentetracarbonsäure, Anthrachinonpigmente, Thioindigoderivate, Chinacridone, Dioxazine oder Phthalocyaninpigmente in Betracht.

Die erfindungsgemäßen Pigmentpräparationen werden vorteilhaft erhalten, wenn man organisches Pigment, Trägermaterial, Polymerweichmacher und Dispergierhilfsmittel, bei einer Temperatur von 120 bis 150°C plastifiziert und anschließend bei einer Temperatur von 80 bis 120°C dispergiert. Hierdurch erreicht man die hohe Pigmentaufnahme und besitzt gleichzeitig die Möglichkeit, die Präparation in einen Erweichungsbereich von ca. 80 bis 130°C zu bringen.

Zweckmäßig führt man das erfindungsgemäße Verfahren in einer Dispergierapparatur in kontinuierlicher oder diskontinuierlicher Arbeitsweise durch.

Je nach Anforderung kann die erfindungsgemäße hochkonzentrierte Pigmentpräparation in die jeweils gewünschte Lieferform übergeführt werden, z.B. mittels Wassergranulierung in eine Granulatform oder durch Mahlung in eine Pulverform.

Weiterhin ist eine Verdünnung mit den meisten handelsüblichen Polymeren, z.B. in einem kontinuierlich arbeitenden Extruder möglich.

Die erfindungsgemäßen Pigmentpräparationen können in vorteilhafter Weise ohne irgendwelche weiteren Dispergierschritte zur Einfärbung von thermoplastischen Kunststoffen, beispielsweise von Polyvinylchlorid, Polyolefinen, Styrolpolymerisaten, Polyamid, Polycarbonat, Polyethylenterephthalat oder Polybutylenterephthalat verwendet werden.

Die folgenden Beispiele sollen die Erfindung näher erläutern.

Beispiel 1

42 g eines Mischpolymerisats aus Methylmethacrylat und Butylmethacrylat mit einem Molekulargewicht von 100000, 27 g eines Weichmachers auf Basis von Adipinsäure und Butan-1,4-diol mit einem Molekulargewicht von ca. 6000, und 21 g eines Dispergierhilfsmittels auf Basis von zweifach mit Stearinsäure verestertem Pentaerythrit wurden mit 210 g C.I. Pigment Gelb 183 in einem Innenmischer vermengt, bei einer Temperatur von 150°C plastifiziert und ohne weitere Energiezufuhr während 2 Stunden bei einer Temperatur von 100°C dispergiert. Das erhaltene Produkt (Pigmentgehalt 50 Gew.-% wurde zerkleinert und anschließend zu einer staubarmen Präparation (Teilchendurchmesser < 500 μ) gemahlen. Bei der Einfärbung von Polypropylen erhielt man stippenfreie Produkte. Die gute Pigmentfeinheit spiegelt sich auch in der Farbstärke wieder. Gegenüber dem Ausgangspigment erhielt man einen Farbstärkegewinn von x 12 % (Dispergierhärte nach DIN 53 775, Teil 7 = O).

Beispiel 2

34 g eines Mischpolymerisats aus Methylmethacrylat und Butylmethacrylat mit einem Molekulargewicht von 100000, 36 g eines Weichmachers auf Basis von Adipinsäure und Butan-1,4-diol mit einem Molekulargewicht von ca. 6000, und 30 g eines Dispergierhilfsmittels auf Basis von zweifach mit Stearinsäure verestertem Pentaerythrit wurden zusammen mit 100 g C.I. Pigment Rot 149 analog Beispiel 1 präpariert (Pigmentgehalt 50 Gew.-%). Bei der Einfärbung von ABS erhielt man stippenfreie Produkte. Gegenüber dem Ausgangspigment erhielt man einen Farbstärkegewinn von + 8 % (Dispergierhärte = O).

Beispiel 3

60 g eines Mischpolymerisats aus Methylmethacrylat und Butylmethacrylat mit einem Molekulargewicht von 100000, 45 g eines Weichmachers auf Basis von Adipinsäure und Butan-1,4-diol mit einem Molekulargewicht von ca. 6000, und 15 g eines Dispergierhilfsmittels auf Basis von zweifach mit Stearinsäure verestertem Pentaerythrit wurden zusammen mit 180 g C.I. Pigment Blau 15:3 analog Beispiel 1 präpariert (Pigmentgehalt 60 Gew.-%). Bei einer Abmischung von einem Gewichtsteil der Präparation mit 10 Gewichtsteilen Titandioxid erhielt man einen Farbstärkegewinn von c 7 % gegenüber dem Ausgangspigment (Dispergierhärte = O).

**Ansprüche**

1. Pigmentpräparationen, enthaltend 50 bis 75 Gew.-% eines organischen Pigments, als Trägermaterial Polymerisate auf Basis von Methyl- und/oder Butylmethacrylat, die ein Molekulargewicht von 100000 bis 200000 aufweisen, einen Polymerweichmacher auf Basis von Vollestern von Polyalkoholen mit polyfunktionellen Säuren sowie ein Dispergierhilfsmittel auf Basis von Partialestern von Polyalkoholen mit Fettsäuren.

2. Pigmentpräparationen gemäß Anspruch 1, enthaltend einen Polymerweichmacher auf Basis Adipinsäure mit einem Molekulargewicht von 2000 bis 6000.

3. Pigmentpräparationen gemäß Anspruch 1, enthaltend ein Dispergierhilfsmittel auf Basis eines Pentaerythrit-Partialesters.

4. Pigmentpräparationen gemäß Anspruch 1, enthaltend Trägermaterial, Polymerweichmacher und Dispergierhilfsmittel im Gewichtsverhältnis 0,5:0,5:1 bis 4:3:1.

5. Verfahren zur Herstellung der Pigmentpräparationen gemäß Anspruch 1, dadurch gekennzeichnet, daß man organisches Pigment, Trägermaterial, Polymerweichmacher und Dispergierhilfsmittel mischt, bei einer Temperatur von 120 bis 150°C plastifiziert und anschließend bei einer Temperatur von 80 bis 120°C dispergiert.

6. Verwendung der Pigmentpräparationen gemäß Anspruch 1 zur Einfärbung von thermoplastischen Kunststoffen.